Europäisches Patentamt

European Patent Office

Office européen des brevets

(19)

(11) Numéro de publication: **0 004 485**
**B1**

(12) # FASCICULE DE BREVET EUROPEEN

(45) Date de publication du fascicule de brevet:
**01.04.81**

(51) Int. Cl.³: **B 60 R 21/10** // B60N1/10

(21) Numéro de dépôt: **79400079.4**

(22) Date de dépôt: **06.02.79**

(54) Dispositif d'accrochage d'une ceinture de sécurité sur un véhicule à siège transformable.

(30) Priorité: **21.03.78 FR 7808136**

(43) Date de publication de la demande:
**03.10.79 Bulletin 79/20**

(45) Mention de la délivrance du brevet:
**01.04.81 Bulletin 81/13**

(84) Etats contractants désignés:
**DE GB IT**

(56) Documents cités:
**FR-A-2 044 536**
**FR-A-2 085 077**
**FR-A-2 208 361**
**US-A-3 219 387**
**US-A-3 606 454**

(73) Titulaire: **AUTOMOBILES PEUGEOT, 75, avenue de la Grande Armée, F-75116 Paris (FR)**
Titulaire: **SOCIETE ANONYME AUTOMOBILES CITROEN, 117 à 167, Quai André Citroen, F-75747 Paris Cedex 15 (FR)**

(72) Inventeur: **Mauron, Gérard Paul Lucien, 12 Allée des Gardes Royales, F-78000 Versailles (FR)**

(74) Mandataire: **Polus, Camille et al, c/o Cabinet Lavoix 2, Place d'Estienne d'Orves, F-75441 Paris Cedex 09 (FR)**

ACTORUM AG.

## Dispositif d'accrochage d'une ceinture de sécurité sur un véhicule à siège transformable

La présente invention concerne un dispositif permettant l'accrochage, sur le plancher d'un véhicule, d'une ceinture de sécurité destinée à maintenir un passager sur un siège arrière susceptible de prendre différentes configurations en fonction de l'usage qui est fait du véhicule.

Sur un véhicule automobile, les sièges arrière sont généralement constitués par une banquette unique occupant toute la largeur du véhicule. Lorsque ces sièges sont fixes, il est aisé de prévoir, à travers l'assise et vers l'arrière, un passage pour des bras fixés sur le plancher et sur lesquels peuvent être accrochées les ceintures de sécurité.

Lorsque la banquette arrière est transformable pour permettre un accroissement temporaire du volume de chargement, il est beaucoup plus difficile d'aménager les points d'accrochage des ceintures sur le plancher.

La demande de brevet européen n° 4484 appartenant aux Demanderesses, décrit un siège transformable pour véhicule automobile, l'assise du siège comportant à sa partie arrière des logements pour des bras portant des moyens d'accrochage de ceinture de sécurité.

L'invention vise à perfectionner encore la technique décrite dans la demande de brevet précitée et à fournir une disposition simple et pratique des moyens d'ancrage sur le plancher, de façon à ne créer aucune gêne pour la transformation de la banquette.

De préférence, ces moyens sont aménagés pour qu'en cas de non-utilisation, ils n'apportent aucune restriction à l'occupation du siège par des passagers.

L'invention s'applique à un dispositif d'accrochage pour une ceinture de sécurité associée à une banquette transformable de véhicule automobile, comprenant une assise relevable vers l'avant et un dossier rabattable vers l'avant, au moins un bras disposé dans une encoche ménagée sur le bord arrière de l'assise et articulé sur le plancher du véhicule autour d'un axe sensiblement transversal permettant son rabattement vers l'avant sous la pousée du dossier, lorsque celui-ci est rabattu, caractérisé en ce qu'un organe élastique assure le relevage automatique dudit bras contre une butée lorsque le dossier est relevé.

De préférence, ladite butée est escamotable.

Suivant une autre caractéristique de l'invention, une barrette ferme l'arrière de l'encoche, de façon que, lorsque le bras a été repoussé au-delà de sa butée éclipsable, le relevage de l'assise provoque le retour du bras contre sa butée.

Un exemple de réalisation fait l'objet de la description qui suit, en référence aux dessins joints dans lesquels:

– la Fig. 1 représente, en coupe longitudinale par l'axe du véhicule, un dispositif selon l'invention;

– la Fig. 2 est une vue partielle en plan du dispositif de la Fig. 1;

– la Fig. 3 est un détail à plus grande échelle;

– la Fig. 4 est une vue suivant la flèche 4 de la Fig. 3.

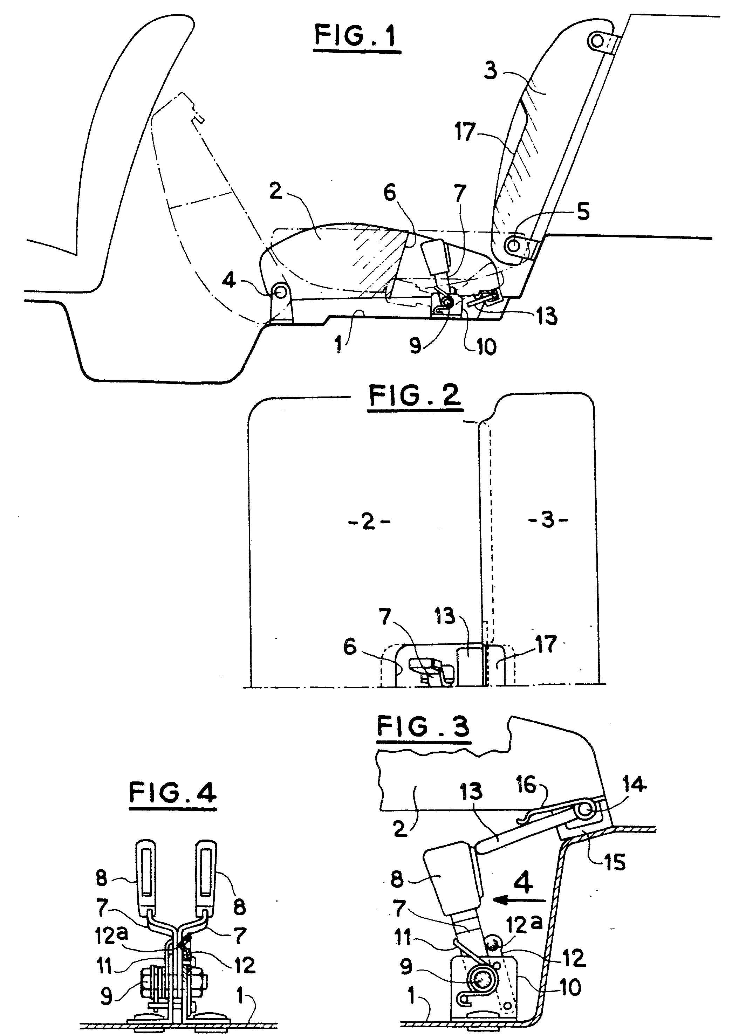

On voit, sur la Fig. 1, un plancher 1 de véhicule automobile supportant une banquette arrière constituée par une assise 2 et un dossier 3.

Suivant une disposition classique, l'assise 2 est articulée autour d'un axe transversal 4 permettant son relevage vers l'avant, tandis que le dossier est articulé autour d'un axe transversal 5 permettant son rabattement vers l'avant, à la place de l'assise, en vue d'accroître le volume de chargement du véhciule.

L'assise 2 comporte, vers l'arrière, une encoche 6 dans laquelle s'engagent deux bras 7 munis chacun d'un mécanisme d'accrochage 8 pour une ceinture de sécurité, non représentée.

Les bras 7 sont articulés sur un axe transversal 9 porté par des supports 10 fixés sur le plancher 1 du véhicule. Un ressort 11 tend à repousser les bras 7 vers l'arrière contre une butée escamotable 12 constituée ici par une lame de ressort recourbée à son extrémité libre pour former une saillie 12a engagée derrière les bras 7.

A la partie arrière de l'encoche 6 est disposée une barrette 13 articulée autour d'un axe 14 et maintenue en appui sur une butée 15 par un ressort 16.

Une légère cavité 17 est ménagée dans la partie du dossier 3 destinée à venir en contact avec les bras 7 lors du rabattement du dossier vers l'avant.

Le dispositif tel que décrit ci-dessus fonctionne comme suit:

En position normale d'utilisation de la banquette arrière, comme représenté à la Fig. 1, les bras 7 sont relevés et maintenus par le ressort 11 contre la butée escamotable 12.

Pour accroître le volume de chargement du véhicule, il suffit, à partir de cette position, et sans se préoccuper des bras 7, de relever vers l'avant l'assise 2 et de rabattre, également vers l'avant le dossier 3. Ce dernier mouvement entraîne l'abaissement des bras 7 qui restent logés dans la cavité 17 du dossier.

Les opérations inverses ramènent la banquette en position d'utilisation, le ressort 11 assurant le relevage des bras 7 dès que le dossier 3 est relevé.

Si l'on désire utiliser la partie de la banquette où se trouvent les bras 7 pour y asseoir un passager, lorsque les ceintures ne sont pas utilisées, il suffit de repousser manuellement les bras 7 vers l'arrière en déplaçant la butée escamotable 12.

Si à partir de cette dernière position, on désire accroître le volume du compartiment à bagages, il n'y a pas davantage à s'occuper des bras 7. En effet, lors de l'action manuelle exercée sur les bras 7 ceux-ci ont été placés sur la trajectoire de l'extrémité de la barrette 13 de sorte que le relevage de l'assise 2 provoque sous l'action de cette barrette, le retour des bras 7 contre leur butée 12.

La barrette 13, du fait de sa mobilité, constitue un dispositif à cliquet qui assure le relevage des bras 7 sans s'opposer à la remise en place de l'assise 2.

## Revendications

1. Dispositif d'accrochage pour une ceinture de sécurité associée à une banquette transformable de véhicule automobile, comprenant une assise (2) relevable vers l'avant et un dossier (3) rabattable vers l'avant, au moins un bras (7) disposé dans une encoche (6) ménagée sur le bord arrière de l'assise (2) et articulé sur le plancher (1) du véhicule autour d'un axe (9) sensiblement transversal permettant son rabattement vers l'avant sous la poussée du dossier (3) lorsque celui-ci est rabattu, caractérisé en ce qu'un organe élastique (11) assure le relevage automatique dudit bras (7) contre une butée (12) lorsque le dossier (3) est relevé.

2. Dispositif suivant la revendication 1, caractérisé en ce que ladite butée (12) est escamotable.

3. Dispositif suivant la revendication 2, caractérisé en ce que ladite butée (12) est constituée par une lame de ressort recourbée à son extrémité libre pour former une saillie (12a) engagée derrière le bras (7).

4. Dispositif suivant l'une quelconque des revendications 1 à 3, caractérisé en ce que le dossier (3) comporte une cavité (17) ménagée dans la partie du dossier destinée à venir en contact avec ledit bras (7) lors du rabattement du dossier vers l'avant.

5. Dispositif suivant l'une quelconque des revendications 1 à 4, caractérisé en ce qu'il comporte en outre une barrette (13) de relevage dudit bras (7) lorsqu'il a été repoussé au-delà de ladite butée (12), ladite barrette (13) étant articulée sur un axe (14) solidaire de l'assise (2) et fermant l'arrière de ladite encoche (6).

6. Dispositif suivant la revendication 5, caractérisé en ce que ladite barrette (13) est maintenue en appui sur une butée (15) solidaire de l'assise, au moyen d'un ressort (16) formant ainsi un dispositif à cliquet assurant le relevage du bras (7) sans s'opposer à la remise en place de l'assise (2).

## Patentansprüche

1. Vorrichtung zum Einhängen eines Sicherheitsgurts in Verbindung
– mit einer umlegbaren Kraftfahrzeug-Sitzbank einschliesslich eines nach vorn anhebbaren Sitzkissens und einer nach vorn umlegbaren Sitzlehne, und
– mit wenigstens einem Arm, der in einer am hinteren Rand des Sitzkissens ausgebildeten Ausnehmung angeordnet und auf dem Fahrzeugboden an einer im wesentlichen querverlaufenden Achse angelenkt ist, die unter dem Schub der Sitzlehne bei deren Umlegung das Umlegen des Arms nach vorn ermöglicht,
dadurch gekennzeichnet,
– dass bei Anhebung der Sitzlehne (3) ein elastisches Organ (11) das automatische Anheben des Arms (7) gegen einen Anschlag (12) bewirkt.

2. Vorrichtung nach Anspruch 1, dadurch gekennzeichnet,
– dass der Anschlag (12) umklappbar ist.

3. Vorrichtung nach Anspruch 2, dadurch gekennzeichnet,
– dass der Anschlag (12) aus einer Blattfeder mit gekrümmtem freiem Ende besteht zur Bildung eines hinter den Arm (7) greifenden Vorsprungs (12a).

4. Vorrichtung nach einem der Ansprüche 1 bis 3, dadurch gekennzeichnet,
– dass die Sitzlehne (3) einen Hohlraum (17) aufweist, der in dem Teil der Sitzlehne (3) ausgebildet ist, der beim Umlegen der Sitzlehne (3) nach vorn mit dem Arm (7) in Berührung kommen soll.

5. Vorrichtung nach einem der Ansprüche 1 bis 4, gekennzeichnet
– durch einen Steg (13) zum Anheben des Arms (7), wenn der Arm (7) über den Anschlag (12) hinaus gedrückt wird,
– wobei der Steg (13) an einer mit dem Sitzkissen (2) fest verbundenen Achse (14) angelenkt ist und die Rückseite der Ausnehmung (6) schliesst.

6. Vorrichtung nach Anspruch 5, dadurch gekennzeichnet,
– dass der Steg (13) durch eine Feder (16) in Anlage an einem mit dem Sitzkissen (2) fest verbundenen Anschlag (15) gehalten wird und eine Sperrvorrichtung bildet, die das Anheben des Arms (7) ermöglicht, ohne sich dem Zurückstellen des Sitzkissens (2) zu widersetzen.

## Claims

1. A hooking device for a safety belt associated with a convertible bench seat structure of an automobile vehicle, comprising a forwardly raisable seat (2) and a backrest (3) capable of being forwardly swung over, at least one arm (7) disposed in a recess (6) formed on the rear edge of the seat (2) and mounted on the floor (1) of the vehicle to pivot about a substantially transverse spindle (9) so that it is capable of being forwardly swung over under the thrust exerted by the backrest (3) when the latter is swung over, characterized in that an elastic means (11) automatically raises said arm (7) against an abutment (12) when the backrest (3) is raised.

2. A device as claimed in claim 1, characterized in that said abutment (12) is withdrawable.

3. A device as claimed in claim 2, characterized in that said abutment (12) is constituted by a spring strip which is curved at its free end so as to form a projection (12a) engaged behind the arm (7).

4. A device as claimed in claim 1, 2 or 3, characterized in that the backrest (3) comprises a cavity (17) formed in the part of the backrest which comes in contact with said arm (7) when swinging the backrest forwardly.

5. A device as claimed in any one of the claims 1 to 4, characterized in that it further comprises a bar (13) for 4 raising said arm (7) when the arm has been urged beyond said abutment (12), said bar (13) being pivotally mounted on a pin (14) which is rigid with the seat (2) and closes the rear of said recess (6).

6. A device as claimed in claim 5, characterized in that said bar (13) is maintained against an abutment (15) rigid with the seat by means of a spring (16), thereby forming a pawl device which raises the arm (7) but does not oppose putting the seat back into its place.

0 004 485

## FIG.1

## FIG.2

## FIG.3

## FIG.4

5